# EUROPÄISCHE PATENTSCHRIFT

(11) **EP 0 545 231 B1**
(45) Veröffentlichungstag und Bekanntmachung des Hinweises auf die Patenterteilung: **24.01.1996**
(21) Anmeldenummer: 92120010.1
(22) Anmeldetag: 25.11.1992
(51) Int. Cl.: C22C 9/04

(54) **Verwendung einer Kupfer-Mangan-Zink-Legierung als Brillenlegierung**
Application of a copper-manganese-zinc alloy for spectacle frames
Utilisation d'un alliage cuivre-manganèse-zinc pour montures de lunette

(30) Priorität: 06.12.1991 DE 4140262
(43) Veröffentlichungstag der Anmeldung: 09.06.1993
(73) Patentinhaber: WIELAND-WERKE AG, D-89079 Ulm (DE)
(72) Erfinder: Bögel, Andreas, Dr., W-7913 Senden (DE)

(56) Entgegenhaltungen:
- EP-A- 0 119 501
- EP-A- 0 367 978
- CH-A- 554 418
- DE-C- 343 739
- FR-A- 967 018
- JOURNAL OF METALS Bd. 25, Nr. 1, Januar 1973, Seiten 24 - 29 TYLER 'Manganese in copper based alloys'

## Beschreibung

Die Erfindung betrifft die Verwendung einer Kupfer-Mangan-Zink-Legierung als Legierung zur Herstellung von Brillenteilen. Unter Brillenteilen sollen dabei insbesondere Brillenbügel, Brillengestelle und Brillenscharniere verstanden werden.

Von einer guten Brillenlegierung werden u.a. ausreichende mechanische Festigkeit (Zugfestigkeit > 500 MPa, Härte: 160 - 260 HV), ein niedriger Elastizitätsmodul, ausreichende Entfestigungsbeständigkeit, ein ansprechendes optisches Aussehen, gute Polierbarkeit und Beschichtbarkeit erwartet.

Für diesen Zweck wurden bisher insbesondere Neusilberlegierungen (z.B. CuNil8Zn20) eingesetzt.

Die bekannten Legierungen, die für diesen Einsatzzweck vorgesehen sind, weisen allerdings den Nachteil auf, daß sie in der Regel einen sehr hohen Nickelanteil enthalten. Da der Prozentsatz der Bevölkerung, welcher Allergien gegen Nickel hat, stark zugenommen hat, sind viele dieser Legierungen nicht oder nur mit erheblichem Aufwand, beispielsweise durch Aufbringung zusätzlicher Beschichtungen, verwendbar.

Der Erfindung liegt daher die Aufgabe zugrunde, eine Brillenlegierung vorzuschlagen, welche bei kostengünstiger Herstellbarkeit und günstigen hohen mechanischen Festigkeiten einen niedrigen Nickelgehalt oder keinen Nickelgehalt aufweist.

Die Erfindung wird durch die Verwendung einer Kupfer-Mangan-Zink-Legierung gelöst, die aus 7,5 bis 35% Mangan, 4 bis 30% Zink, Rest Kupfer und übliche Verunreinigungen, besteht (die Prozentangaben beziehen sich dabei auf das Gewicht).

Die Zusammensetzung von Kupferlegierungen der genannten Art ist zwar beispielsweise aus der FR-PS 967.018 oder aus Dies: "Kupfer und Kupferlegierungen in der Technik" bekannt, dort findet sich jedoch kein Hinweis auf den beanspruchten Verwendungszweck.

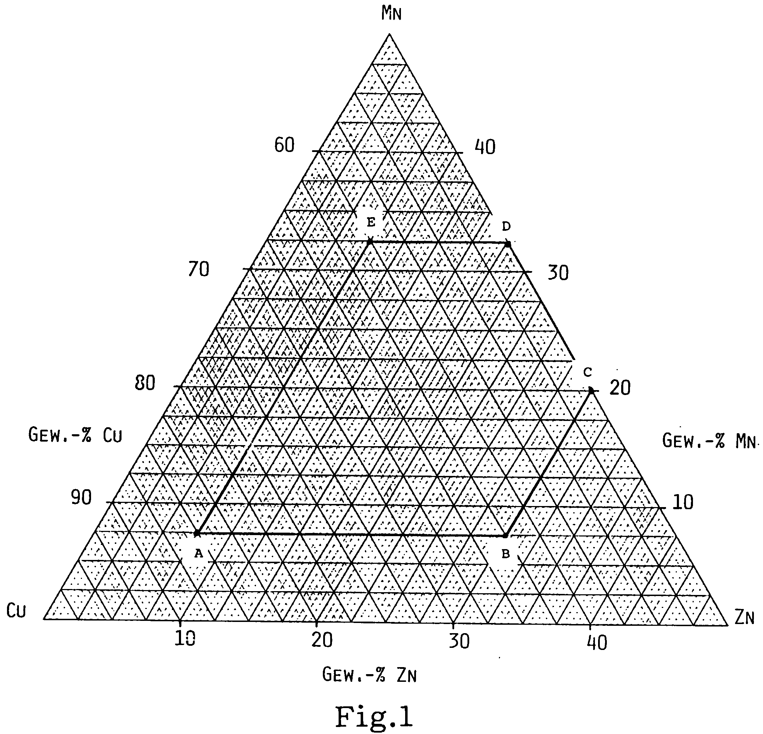

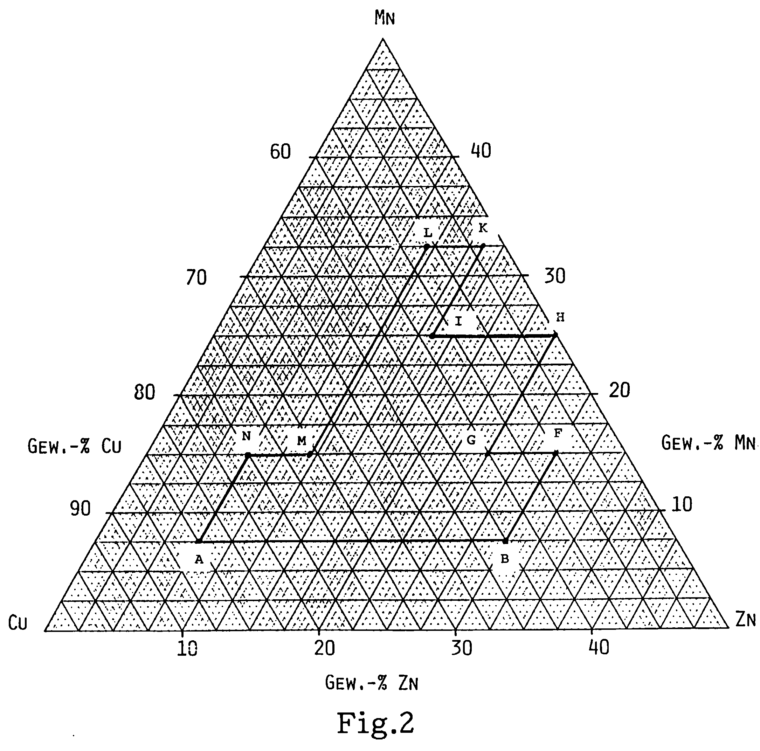

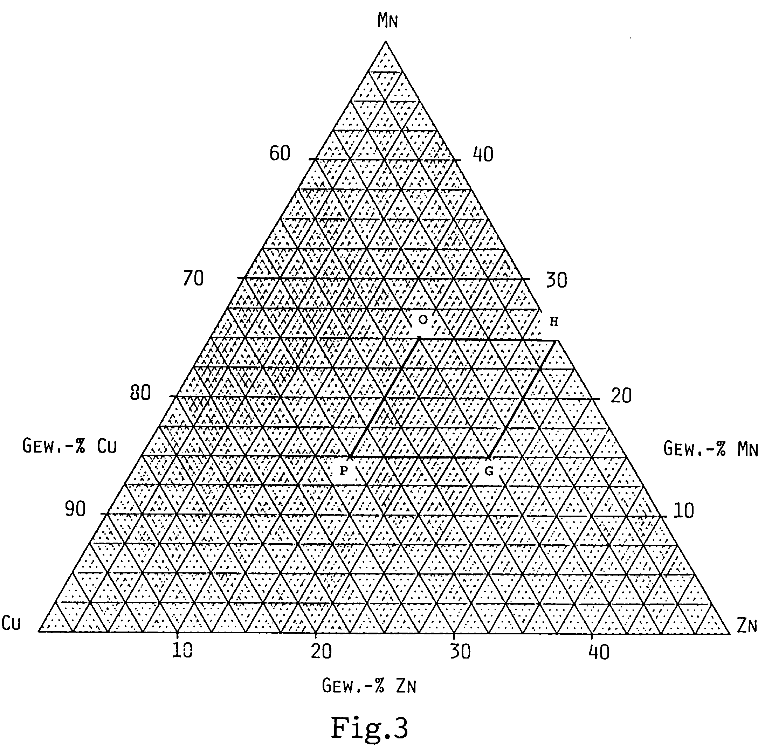

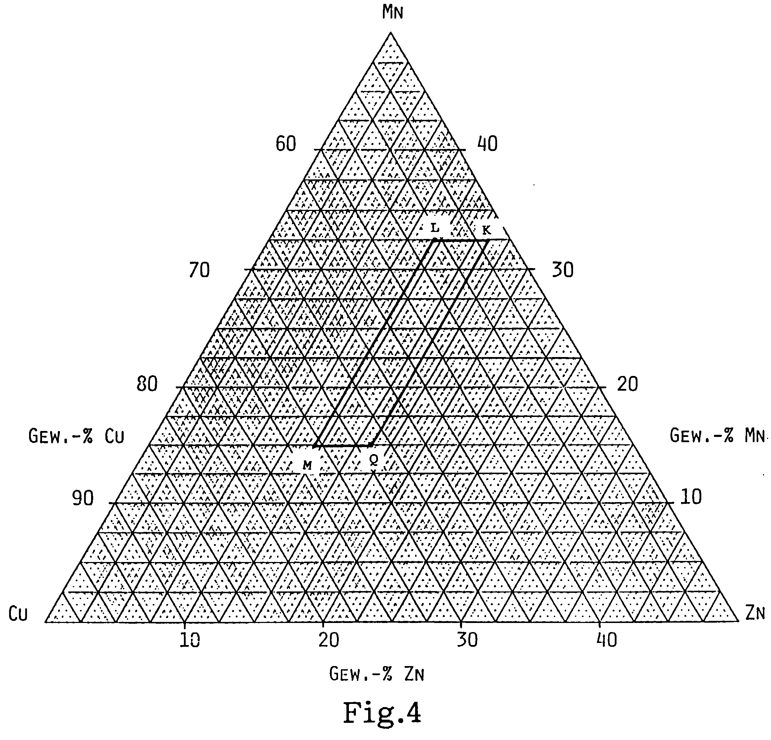

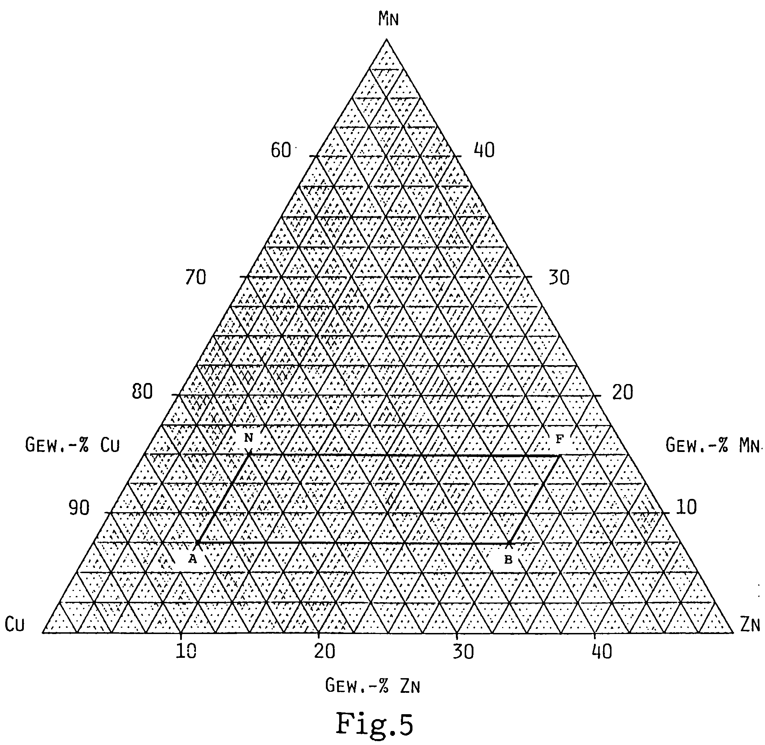

Als bevorzugte Ausführungsformen der Erfindung wird die Verwendung einer Kupfer-Legierung entsprechend der Zusammensetzungen nach den Ansprüchen 2 bis 6 empfohlen. Die entsprechenden Zusammensetzungen sind in die Konzentrationsdreiecke nach Fig.1 - 5 eingezeichnet. Die Legierungen gemäß Zusammensetzung nach Anspruch 4 weisen eine silberhelle Farbe auf, solche gemäß Zusammensetzung nach Anspruch 5 eine stahlgraue Farbe und solche gemäß Zusammensetzung nach Anspruch 6 einen gelben bis roten Farbton.
Zusätze von Nickel und/oder Zinn nach Anspruch 7 tragen zur Steigerung der Festigkeit und Entfestigungsbeständigkeit bei. Zusätze von Magnesium nach Anspruch 8 wirken als Desoxidationsmittel und tragen zur Verbesserung der Gießbarkeit unter atmosphärischen Bedingungen bei. Zusätze von Aluminium nach Anspruch 9, insbesondere zwischen 0,2 und 0,8% reichen aus, um die Ausbildung der Gußoberfläche sehr günstig zu beeinflussen. Darüber hinausgehende Gehalte dienen der Festigkeitssteigerung. Je nach eingesetztem Gießverfahren und thermomechanischer Behandlung kann es angezeigt sein, durch Eisenzusätze nach Anspruch 10 neben einer Feinkornbildung im Guß auch eine Hemmung des Kornwachstums beim Glühen zu erzielen. Hierzu empfehlen sich insbesondere Eisenzugaben bis zu 3%. Zusätze von Blei nach Anspruch 11 bewirken eine Verbesserung der Zerspanbarkeit.

Die erfindungsgemäßen Legierungen zeichnen sich durch eine Reihe erheblicher Vorteile aus:
1. Im Gegensatz zu den aus dem Stand der Technik bekannten Legierungen weisen die erfindungsgemäßen Legierungen einen sehr geringen Nickelgehalt von maximal 5 Gewichtsprozent auf oder sind sogar nickelfrei, während bei den bekannten Legierungen Nickelgehalte von bis zu 26% auftreten können.
2. Die erfindungsgemäßen Legierungen weisen deutlich geringere Elastizitätsmodule (E-Module) auf als die bisher eingesetzten Neusilberlegierungen:

| | E-Modul |
|---|---|
| CuMn18Zn14 : | 95 GPa |
| CuMn35Zn14 : | 116 GPa |
| CuMn18Zn14Ni5: | 96 GPa |
| zum Vergleich: | |
| CuNi18Zn20 : | 125 GPa. |

Dadurch ertragen die erfindungsgemäßen Legierungen beim Gebrauch der aus ihnen hergestellten Brillenbügel auftretende Biegungen wesentlich besser, d. h. mit deutlich geringeren oder gar keinen bleibenden Verformungen.
3. Durch geeignete Wahl der Zusammensetzung im vorgeschlagenen Bereich können gewünschte Farbtöne eingestellt werden: Von einem zarten Goldton bis stahlgrau (vgl. Zusammensetzungen nach Anspruch 5/6), so daß modischen Trends ggfs. auch mit geringeren Veredelungsauflagen als bei herkömmlichen Legierungen nachgekommen werden kann.
Die Legierungen mit Mangan-Gehalten-von über 20%, also beispielsweise eine Legierung mit 70% Kupfer, 20% Mangan und 10% Zink, haben eine weiße Farbe ähnlich wie die Neusilberlegierungen. Die Härte ist etwas höher, jedoch verfügen diese Legierungen über eine bessere Verformungsfähigkeit als die entsprechenden nickelhaltigen Legierungen.

4. Die Korrosionseigenschaften der erfindungsgemäßen Legierungen sind denen herkömmlicher Legierungen für diesen Zweck mindestens ebenbürtig und teilweise sogar besser.

Die Erfindung wird anhand des folgenden Ausführungsbeispiels näher erläutert:

Aus Kathodenkupfer, Feinzink sowie Elektrolytmangan und Kupfer-Mangan-Vorlegierung wurde in einem Tammann-Ofen eine erfindungsgemäße Legierung mit 18,8 Gewichtsprozent Mangan, 21,2 Gewichtsprozent Zink, Rest Kupfer und übliche Verunreinigungen erschmolzen und bei 1050°C zu quaderförmigen Blöcken vergossen. Aus diesen Blöcken wurden zylindrische Probenkörper mit 20 mm 0̸ herausgearbeitet. Durch Kaliberwalzen wurden mit Zwischenglühungen bei 650°C an 5,15 mm vierkant kaltumgeformt und nach weiterer Zwischenglühung an 1,55 mm 0̸ gezogen. Die Schlupverformung beträgt dabei 92%. Der ziehharte Draht hat erwartungsgemäß einen silbrig-weißen Glanz.

Die erreichten mechanischen Kennwerte sind:

| | |
|---|---|
| E-Modul: | 105 GPa |
| Zugfestigkeit: | 980 MPa |
| Bruchdehnung A₁₀: | 6,3% und |
| Härte HV10: | 253. |

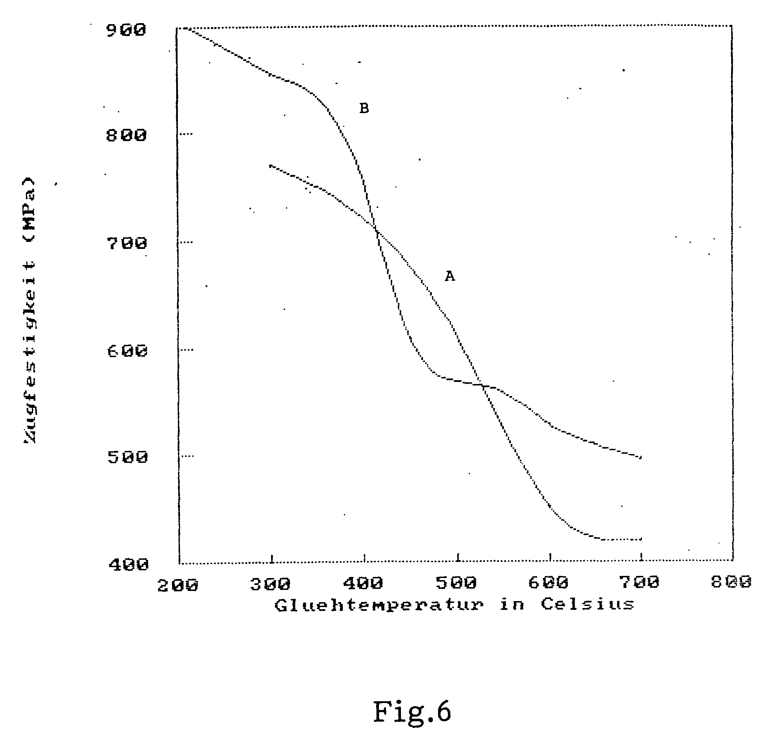

Das Erweichungsverhalten bei einstündiger Glühung im Vergleich zu CuNil8Zn20 als typischem Optikwerkstoff nach DIN zeigt Fig.6. Die Kurve A steht für CuNil8Zn20 nach 60% Kaltverformung, Kurve B zeigt den Verlauf der Zugfestigkeit für die beschriebene Legierung. Aus dem Vergleich geht hervor, daß die erfindungsgemäße Legierung hinsichtlich ihres Entfestigungsverhaltens und des Niveaus der mechanischen Kennwerte dem bewährten Werkstoff überlegen ist.

## Patentansprüche

1. Verwendung einer Kupfer-Mangan-Zink-Legierung, bestehend in Gew. % aus
7,5 bis 35% Mangan,
4 bis 30% Zink,
Rest Kupfer und übliche Verunreinigungen, als Legierung zur Herstellung von Brillenteilen.

2. Verwendung einer Kupferlegierung nach Anspruch 1, deren Zusammensetzung gemäß Konzentrationsdreieck nach Fig.1 in der Fläche mit den Eckpunkten A (85% Cu, 7,5% Zn, 7,5% Mn); B (62,5% Cu, 30% Zn, 7,5% Mn); C (50% Cu, 30% Zn, 20% Mn); D (50% Cu, 17,5% Zn, 32,5% Mn); E (60% Cu, 7,5% Zn, 32,5% Mn) liegt, für den Zweck nach Anspruch 1.

3. Verwendung einer Kupferlegierung nach Anspruch 1 oder 2, deren Zusammensetzung gemäß Konzentrationsdreieck nach Fig.2 in der Fläche mit den Eckpunkten A (85% Cu, 7,5% Zn, 7,5% Mn); B (62,5% Cu, 30% Zn, 7,5% Mn); F (55% Cu, 30% Zn, 15% Mn); G (60% Cu, 25% Zn, 15% Mn); H (50% Cu, 25% Zn, 25% Mn); I (59% Cu, 16% Zn, 25% Mn); K (51,5% Cu, 16% Zn, 32,5% Mn); L (55,5% Cu, 12% Zn, 32,5% Mn); M (73% Cu, 12% Zn, 15% Mn); N (77,5% Cu, 7,5% Zn, 15% Mn) liegt, für den Zweck nach Anspruch 1.

4. Verwendung einer Kupferlegierung nach Anspruch 3, deren Zusammensetzung gemäß Konzentrationsdreieck nach Fig.3 in der Fläche mit den Eckpunkten P (70% Cu, 15% Zn, 15% Mn); G (60% Cu, 25% Zn, 15% Mn); H (50% Cu, 25% Zn, 25% Mn); O (60% Cu, 15% Zn, 25% Mn) liegt, für den Zweck nach Anspruch 1.

5. Verwendung einer Kupferlegierung nach Anspruch 3, deren Zusammensetzung gemäß Konzentrationsdreieck nach Fig.4 in der Fläche mit den Eckpunkten M (73% Cu, 12% Zn, 15% Mn); Q (69% Cu, 16% Zn, 15% Mn); K (51,5% Cu, 16% Zn, 32,5% Mn); L (55,5% Cu, 12% Zn, 32,5% Mn) liegt, für den Zweck nach Anspruch 1.

6. Verwendung einer Kupferlegierung nach Anspruch 3, deren Zusammensetzung gemäß Konzentrationsdreieck nach Fig.5 in der Fläche mit den Eckpunkten A (85% Cu, 7,5% Zn, 7,5% Mn); B (62,5% Cu, 30% Zn, 7,5% Mn); F (55% Cu, 30% Zn, 15% Mn); N (77,5% Cu, 7,5% Zn, 15% Mn) liegt, für den Zweck nach Anspruch 1.

7. Verwendung einer Kupferlegierung nach einem der Ansprüche 1 bis 6, die zusätzlich Zu Lasten des Restelementes Kupfer jeweils maximal 5% Nickel und/oder Zinn enthält, für den Zweck nach Anspruch 1.

8. Verwendung einer Kupferlegierung nach einem der Ansprüche 1 bis 7, die zusätzlich Zu Lasten des Restelementes Kupfer maximal 1% Magnesium enthält, für den Zweck nach Anspruch 1.

9. Verwendung einer Kupferlegierung nach einem der Ansprüche 1 bis 8, die zusätzlich Zu Lasten des Restelementes Kupfer maximal 5% Aluminium enthält, für den Zweck nach Anspruch 1.

10. Verwendung einer Kupferlegierung nach einem der Ansprüche 1 bis 9, die zusätzlich Zu Lasten des Restelementes Kupfer maximal 5% Eisen enthält, für den Zweck nach Anspruch 1.

11. Verwendung einer Kupferlegierung nach einem der Ansprüche 1 bis 10, die zusätzlich Zu Lasten des Restelementes Kupfer maximal 5% Blei enthält, für den Zweck nach Anspruch 1.

## Claims

1. Use of a copper-manganese-zinc alloy, consisting in X by weight of
7.5 to 35% manganese,
4 to 30% zinc,
remainder copper and usual impurities, as an alloy for the production of spectacle parts.

2. Use of a copper alloy as claimed in Claim 1, the composition of which according to the concentration triangle in Figure 1 lies in the area with the corner points A (85% Cu, 7.5% Zn, 7.5% Mn); B (62.5% Cu, 30% Zn, 7.5% Mn); C (50% Cu, 30% Zn, 20% Mn); D (50% Cu, 17.5% Zn, 32.5% Mn); E (60% Cu, 7.5% Zn, 32.5% Mn), for the purpose according to Claim 1.

3. Use of a copper alloy as claimed in Claim 1 or 2, the composition of which according to the concentration triangle in Figure 2 lies in the area with the corner points A (85% Cu, 7.5% Zn, 7.5% Mn); B (62.5% Cu, 30% Zn, 7.5% Mn); F (55% Cu, 30% Zn, 15% Mn); G (60% Cu, 25% Zn, 15% Mn); H (50% Cu, 25 Zn, 25% Mn); I (59% Cu, 16% Zn, 25% Mn); K (51.5% Cu, 16% Zn, 32.5% Mn); L (55.5% Cu, 12% Zn, 32.5% Mn); M (73% Cu, 12% Zn, 15% Mn); N (77.5% Cu, 7.5% Zn, 15% Mn), for the purpose according to Claim 1.

4. Use of a copper alloy as claimed in Claim 3, the composition of which according to the concentration triangle in Figure 3 lies in the area with the corner points P (70% Cu, 15% Zn, 15% Mn); G (60% Cu, 25% Zn, 15% Mn); H (50% Cu, 25% Zn, 25% Mn); O (60% Cu, 15% Zn, 25% Mn), for the purpose according to Claim 1.

5. Use of a copper alloy as claimed in Claim 3, the composition of which according to the concentration triangle in Figure 4 lies in the area with the corner points M (73% Cu, 12% Zn, 15% Mn); Q (69% Cu, 16% Zn, 15% Mn); K (51.5% Cu, 16% Zn, 32.5% Mn); L (55.5% Cu, 12% Zn, 32.5% Mn), for the purpose according to Claim 1.

6. Use of a copper alloy as claimed in Claim 3, the composition of which according to the concentration triangle in Figure 5 lies in the area with the corner points A (85% Cu, 7.5% Zn, 7.5% Mn); B (62.5% Cu, 30% Zn, 7.5% Mn); F (55% Cu, 30% Zn, 15% Mn); N (77.5% Cu, 7.5% Zn, 15% Mn), for the purpose according to Claim 1.

7. Use of a copper alloy as claimed in one of Claims 1 to 6, which additionally contains, at the expense of the remainder element copper, a maximum in each case of 5% nickel and/or tin, for the purpose according to Claim 1.

8. Use of a copper alloy as claimed in one of Claims 1 to 7, which additionally contains, at the expense of the remainder element copper, a maximum of 1% magnesium, for the purpose according to Claim 1.

9. Use of a copper alloy as claimed in one of Claims 1 to 8, which additionally contains, at the expense of the remainder element copper, a maximum of 5% aluminium, for the purpose according to Claim 1.

10. Use of a copper alloy as claimed in one of Claims 1 to 9, which additionally contains, at the expense of the remainder element copper, a maximum of 5% iron, for the purpose according to Claim 1.

11. Use of a copper alloy as claimed in one of Claims 1 to 10, which additionally contains, at the expense of the remainder element copper, a maximum of 5% lead, for the purpose according to Claim 1.

## Revendications

1. Utilisation, en tant qu'alliage pour la réalisation de pièces de lunettes, d'un alliage cuivre-manganèse-zinc, comprenant en pourcents en poids :
7,5 à 35 % de manganèse
4 à 30 % de zinc,
le reste étant du cuivre et des impuretés habituelles.

2. Utilisation d'un alliage de cuivre selon la revendication 1, pour l'application selon la revendication 1, dont la composition est située, dans le triangle de concentrations de la fig. 1, dans la surface définie par les points A (85% Cu, 7,5% Zn, 7,5% Mn) ; B (62,5% Cu, 30% Zn, 7,5% Mn) ; C (50% Cu, 30% Zn, 20% Mn) ; D (50% Cu, 17,5% Zn, 32,5% Mn) ; E (60% Cu, 7,5% Zn, 32,5% Mn).

3. Utilisation d'alliage de cuivre selon la revendication 1 ou selon la revendication 2, pour l'application selon la revendication 1, dont la composition est située, dans le triangle de concentrations de la fig. 2, dans la surface définie par les points A (85% Cu, 7,5% Zn, 7,5% Mn) ; B (62,5% Cu, 30% Zn, 7,5% Mn) ; F (55% Cu, 30% Zn, 15% Mn); G (60% Cu, 25% Zn, 15% Mn) ; H (50% Cu, 25% Zn, 25% Mn); 1(59% Cu, 16% Zn, 25% Mn) ; K (51,5% Cu, 16% Zn, 32,5% Mn); L (55,5% Cu, 12% Zn, 32,5% Mn) ; M (73% Cu, 12% Zn, 15% Mn); N (77,5% Cu, 7,5% Zn, 15% Mn).

4. Utilisation d'un alliage de cuivre selon la revendication 3, pour l'application selon la revendication 1, dont la composition est située, dans le triangle de concentrations de la figure 3, dans la surface définie par les points P (70% Cu, 15% Zn, 15% Mn) ; G (60% Cu, 25% Zn, 15% Mn) ; H (50% Cu, 25% Zn, 25% Mn) ; O (60% Cu, 15% Zn, 25% Mn).

5. Utilisation d'un alliage de cuivre selon la revendication 3, pour l'application selon de la revendication 1, dont la composition est située, dans le triangle de concentrations de la fig. 4, dans la surface définie par les points M (73% Cu, 12% Zn, 15% Mn) ; Q (69% Cu, 16% Zn, 15% Mn); K (51,5% Cu, 16% Zn, 32,5% Mn) ; L (55,5% Cu, 12% Zn, 32,5% Mn).

6. Utilisation d'un alliage de cuivre selon la revendication 3, pour l'application selon la revendication 1, dont la composition est située, dans le triangle de concentrations de la fig. 5, dans la surface définie par les points A (85% Cu, 7,5% Zn, 7,5% Mn) ; B (62,5% Cu, 30% Zn, 7,5% Mn) ; F (55% Cu, 30% Zn, 15% Mn) ; N (77,5% Cu, 7,5% Zn, 15% Mn).

7. Utilisation d'un alliage de cuivre selon l'une quelconque des revendications 1 à 6, pour l'application selon la revendication 1, qui contient en plus, en déduction du reste de cuivre, au maximum 5 % de nickel et/ou de zinc respectivement.

8. Utilisation d'un alliage de cuivre selon l'une quelconque des revendications 1 à 7, pour l'application selon la revendication 1, qui contient en plus, en déduction du reste de cuivre, au maximum 1 % de magnésium.

9. Utilisation d'un alliage de cuivre selon l'une quelconque des revendications 1 à 8, pour l'application selon la revendication 1, qui contient en plus, en déduction du reste de cuivre, au maximum 5 % d'aluminium.

10. Utilisation d'un alliage de cuivre selon l'une quelconque des revendications 1 à 9, pour l'application selon la revendication 1, qui contient en plus, en déduction du reste de cuivre, au maximum 5 % de fer.

11. Utilisation d'un alliage de cuivre selon l'une quelconque des revendications 1 à 10, pour l'application selon la revendication 1, qui contient en plus, en déduction du reste de cuivre, au maximum 5 % de plomb.
